# EUROPEAN PATENT APPLICATION

(11) **EP 0 818 277 A2**
(43) Date of publication of application: **14.01.1998**
(21) Application number: 97305102.2
(22) Date of filing: 10.07.1997
(51) Int. Cl.: B25B 27/00, B23P 19/04, B60J 10/00

(54) **Clinching apparatus**

(30) Priority: 12.07.1996 GB 9614745
(71) Applicant: Standard Products Limited, Huntingdon Cambridgeshire PE18 6NU (GB)
(72) Inventor: Harris, David Strachan, Orton Wistow, Peterborough PE2 6YT (GB)
(74) Representative: Jones, Michael Raymond

(57) **Abstract**

There is disclosed an apparatus suitable for clinching a channel-shaped member onto a flange, the apparatus comprising:
a first housing (1) having an upper region (2) and a lower region (3);
a second housing (6) having an upper region (7) and a lower region (8), the second housing (6) being adjacent to the first housing (1) and being hingedly mounted with respect to the first housing (1) in an upper region thereof (7);
a first rotatable member (11) projecting downwardly below the lower region (3) of the first housing (1);
a second rotatable member (13) projecting downwardly below the lower region (8) of the second housing (6);
first drive means in the upper region (2) of the first housing (1) and capable of causing rotation of the first rotatable member (11), the first drive means including a first gear (27);
second drive means in the upper region (7) of the second housing (6) and capable of causing rotation of the second rotatable member (13), the second drive means including a second gear (28), the first and second gears (27, 28) being located, meshed and radiused so as to allow the gears to remain operatively engaged even when there is a relative hinging between the first and second housings (1, 6) over a predetermined angle; and
resilient closure means (36, 37) tending to urge the lower regions (3, 8) of the first and second housings (1, 6), and hence the first and second rotatable members (11, 13), together.

## Description

This invention relates to an apparatus suitable, for example, for clinching a channel-shaped member onto a flange, although it is to be appreciated that the apparatus of the present invention could be used in other applications where a clinching action is required.

Many seals used in the automobile industry have a channel-shaped support portion usually with a steel reinforcing core, with sealing limbs projecting from the support portion. For manufacturing purposes and for fitting purposes it is often convenient for the channel-shaped support portion to have its two opposing side walls slightly splayed apart, and this certainly facilitates fitting to the flange or other similar member, after which the support portion can be clinched onto the flange. Although the flange usually has a uniform thickness, nonetheless variations in thickness of flanges occur. If the clinching apparatus takes the form of two rollers which are slightly spaced apart and which advance along the support portion of the seal already loosely fitted on the flange, a sudden increase in thickness of the flange can cause strain or damage to the apparatus.

According to the present invention, there is provided an apparatus suitable for clinching a channel-shaped member onto a flange, the apparatus comprising:
a first housing having an upper region and a lower region;
a second housing having an upper region and a lower region, the second housing being adjacent to the first housing and being hingedly mounted with respect to the first housing in an upper region thereof;
a first rotatable member projecting downwardly below the lower region of the first housing;
a second rotatable member projecting downwardly below the lower region of the second housing;
first drive means in the upper region of the first housing and capable of causing rotation of the first rotatable member, the first drive means including a first gear;
second drive means in the upper region of the second housing and capable of causing rotation of the second rotatable member, the second drive means including a second gear, the first and second gears being located, meshed and radiused so as to allow the gears to remain operatively engaged even when there is a relative hinging between the first and second housings over a predetermined angle; and
resilient closure means tending to urge the lower regions of the first and second housings, and hence the first and second rotatable members, together.

As will be appreciated, the first and second drive means, which include the first and second gears respectively, could directly cause rotation of the first and second rotatable members. However, preferably the second gear in the second housing meshes with a third gear in the second housing with the third gear directly driving the second rotatable member; and preferably the first gear in the first housing meshes with a fourth gear in the first housing, with the fourth gear directly driving the first rotatable member.

The location of the pivot point effected by the hinge is selected, taking into account the location of the first and second gears, so as to ensure that when there is any hinging between the first and second housings, the first and second gears remain operatively engaged.

If desired, the first and second rotatable members can have shaped rolls applied in the regions projecting below the first and second housings, respectively.

The resilient closure means can take any suitable form but a preferable arrangement is one in which a bar passes through the first and second housings and has compression springs located in its end regions acting in such a way as to tend to move the lower regions of the first and second housings together. If desired, in order to prevent the lower regions of the first and second housings from touching each other, a suitable spacer element can be provided, for example a spacer mounted on the aforementioned bar.

If desired, the lowermost regions of the first and second housings can be shaped as a slide so that, as the clinching apparatus is moved along the seal being clinched to the flange, the slide serves to press the seal fully onto the flange.

For a better understanding of the present invention and to show how the same may be carried into effect, reference will now be made, by way of example, to the accompanying drawings, in which:
Figure 1 is a view towards one end face of an apparatus in accordance with the present invention, with certain components not shown;
Figure 2 is a view towards the opposite end face of the apparatus shown in Figure 1;
Figure 3 is a view towards one side of the apparatus shown in Figures 1 and 2;
Figure 4 is a plan view of the apparatus of Figure 3; and

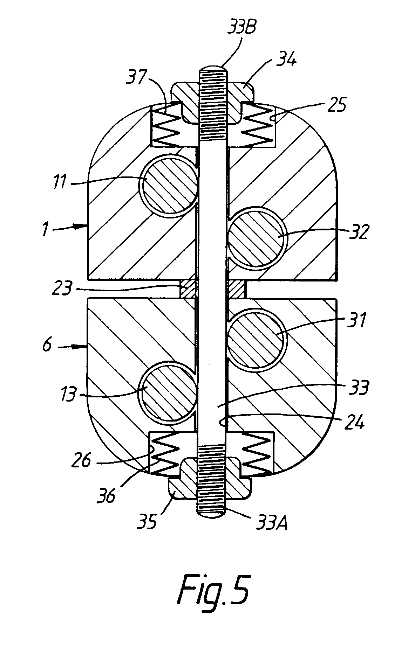

Figure 5 is a horizontal section taken along the line V-V in Figure 1.

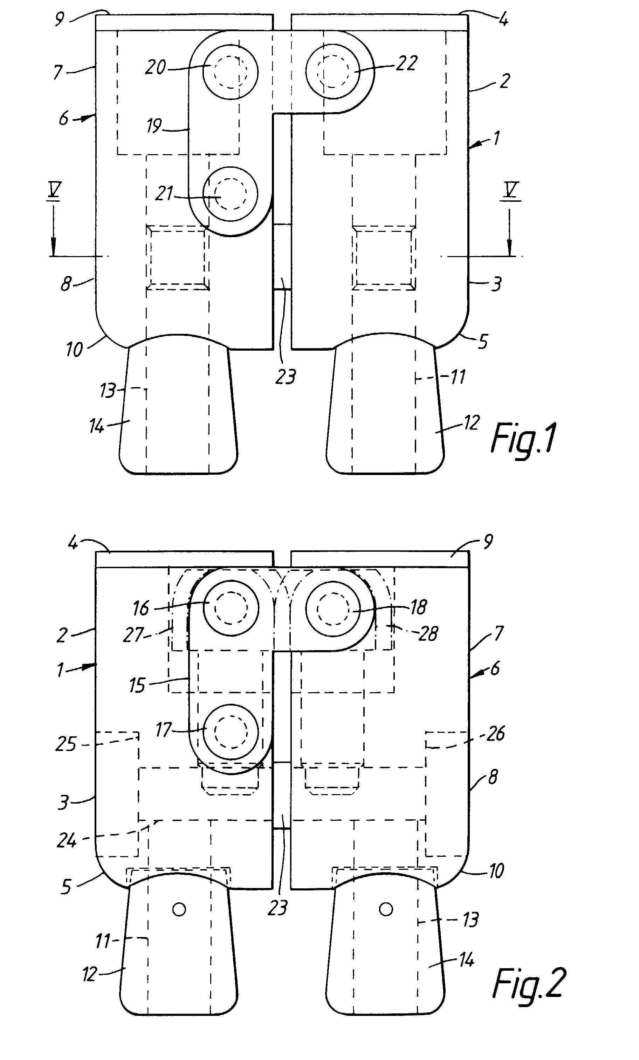

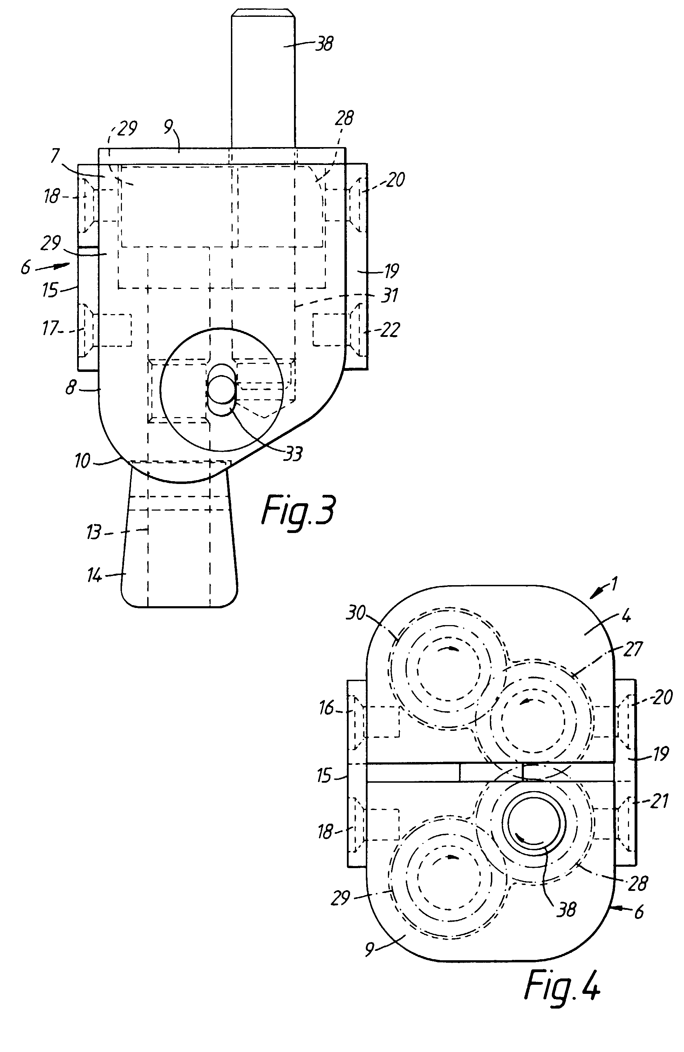

Figure 2 is a view towards the left face of the apparatus shown in Figure 3, and Figure 1 is a view towards the right face of the apparatus shown in Figure 3.

Referring to the drawings, there is shown a first housing 1 which has an upper region 2, a lower region 3, and a cover plate 4 of the top of the upper region, with the lower region 3 having a foot 5.

There is a second housing 6, which is generally mirror image of the first housing 1, with the second housing 6 having an upper region 7, a lower region 8, and a cover plate 9 at the top of the upper region 7, the lower region 8 being provided with a foot 10.

Located within the lower region 3 of the first housing 1 is a first rotatable spindle 11 to which is secured a roll 12 which tapers upwardly.

Similarly, located within the lower region 8 of the second housing 6 is a second rotatable spindle 13 to which is secured a roll 14 which also tapers upwardly.

Mounted on one face end of the apparatus is a first L-shaped hinge 15 secured to the first housing 1 by screws 16 and 17 and secured to the second housing in a pivotal manner by a screw 18.

On the opposite end face the apparatus is a second L-shaped hinge 19 which is secured to the first housing 1 by screws 20 and 21 and pivotally to the second housing 6 by a screw 22.

As is clear from the drawings, the housings 1 and 6 are slightly spaced from each other. This is achieved in the upper regions 2 and 7 by the suitable mounting points of the hinges 15 and 19, and is achieved in the lower regions 3 and 8 by the provision of a spacer 23 which is mounted on a bar (described later) located in a channel 24 which passes through the lower regions 3 and 8 of both housings 1 and 6.

The channel 24 opens into an end recess 25 in the first housing 1 and into an end recess 26 in the second housing 6.

Located in an upper region 2 of the first housing 1 is a first gear 27 which projects into the gap between the housings 1 and 6 and meshes there with a second gear 28 located in the upper region 7 of the second housing 6, the second gear meshing with a third gear 29 located wholly within the upper region 7 of the second housing 6. Similarly the first gear 27 in the first housing 1 meshes with a fourth gear 30 located wholly within the upper region 2 of the first housing 1.

The second gear 28 is mounted on a shaft 31, and the first gear 27 is mounted on a shaft 32, the shafts 31 and 32 extending downwardly into the lower regions of their respective housings. The third gear 29 is secured to the spindle 13, and the fourth gear 30 is secured to the spindle 11. The shaft 31 on which the second gear 28 is located extends upwardly as a projection 38 to which drive can be applied to the apparatus from an external source.

It will be appreciated that drive applied through the upper extension 38 (shown in Figure 3) causes the shaft 31 to rotate, which causes the second gear 28 to rotate which, in turn causes rotation of the third gear 29 and the first gear 27, with the first gear 27 then causing rotation of the fourth gear 30, thus causing rotation of the first and second rotatable spindles 11 and 13 and the rolls 12 and 14, respectively, mounted thereon.

Located in the channel 24 is a bar 33 provided on threaded opposite end regions 33A and 33B with nuts 34 and 35, respectively. There are springs 36 and 37 in a state of compression which are trapped between the nuts 34 and 35 and act on the end face of the recesses 25 and 26 thereby tending to cause the lower regions 3 and 8 of the first and second housings 1 and 6 to be moved towards each other. The aforementioned spacer 23 prevents the first and second housings 1 and 6 from coming into contact with each other. As can best be seen in Figure 3, the spindle 13 and the shaft 31 are of reduced diameter in a region adjacent the bar 33 so as not to contact that bar.

As is best shown in Figure 2, the upper portions of the first and second gears 27 and 28 are radiused so as to allow the gears to mesh effectively without jamming, even when there is hinging between the first and second housing 1 and 6, caused by the apparatus fitting a seal to a flange portion of greater than usual thickness.

## Claims

1. An apparatus suitable for clinching a channel-shaped member onto a flange, the apparatus comprising:
a first housing having an upper region and a lower region;
a second housing having an upper region and a lower region, the second housing being adjacent to the first housing and being hingedly mounted with respect to the first housing in an upper region thereof;
a first rotatable member projecting downwardly below the lower region of the first housing;
a second rotatable member projecting downwardly below the lower region of the second housing;
first drive means in the upper region of the first housing and capable of causing rotation of the first rotatable member, the first drive means including a first gear;
second drive means in the upper region of the second housing and capable of causing rotation of the second rotatable member, the second drive means including a second gear, the first and second gears being located, meshed and radiused so as to allow the gears to remain operatively engaged even when there is a relative hinging between the first and second housings over a predetermined angle; and
resilient closure means tending to urge the lower regions of the first and second housings, and hence the first and second rotatable members, together.

2. An apparatus according to claim 1, wherein the first and second drive means, which include the first and second gears respectively, directly cause rotation of the first and second rotatable members.

3. An apparatus according to claim 1, wherein the second gear in the second housing meshes with a third gear in the second housing, with the third gear directly driving the second rotatable member; and wherein the first gear in the first housing meshes with a fourth gear in the first housing, with the fourth gear directly driving the first rotatable member.

4. An apparatus according to claim 1, 2 or 3, wherein the hinged mounting includes a pivot point, with the location of the pivot point being selected, taking into account the location of the first and second gears, so as to ensure that when there is any hinging between the first and second housings, the first and second gears remain operatively engaged.

5. An apparatus according to any preceding claim, wherein the first and second rotatable members have shaped rolls applied in the regions projecting below the first and second housings, respectively.

6. An apparatus according to any preceding claim, wherein the resilient closure means comprises a bar which passes through the first and second housings and has compression springs located in its end regions acting in such a way as to tend to move the lower regions of the first and second housings together.

7. An apparatus according to any preceding claim, which also, in order to prevent the lower regions of the first and second housings from touching each other, includes a suitable spacer element.

8. An apparatus according to any preceding claim, wherein the lowermost regions of the first and second housings are shaped as a slide so that, as the clinching apparatus is moved along the seal being clinched to the flange, the slide serves to press the seal fully onto the flange.
